# EUROPÄISCHE PATENTANMELDUNG

(11) **EP 4 501 766 A1**
(43) Veröffentlichungstag der Anmeldung: **05.02.2025**
(21) Anmeldenummer: 24189255.3
(22) Anmeldetag: 17.07.2024
(51) Int. Cl.: B62J 45/41, B62J 45/411, B62J 45/412, B62J 45/413, B62J 45/414, B62M 6/50, B62M 9/123, B62M 9/133

(54) **VERFAHREN ZUM STEUERN EINES SCHALTSYSTEMS EINES FAHRRADS**

(30) Priorität: 31.07.2023 DE 102023207297
(71) Anmelder: Robert Bosch GmbH, 70442 Stuttgart (DE)
(72) Erfinder: Swetik, Marten, 72127 Kusterdingen (DE); Stegmaier, Juergen, 72827 Wannweil (DE)

(57) **Zusammenfassung**

Die Erfindung betrifft ein Verfahren (50) zum Steuern eines Schaltsystems (10) eines Fahrrads (100), umfassend die Schritte, insbesondere während eines Pedalierens: Erfassen von Sensordaten, welche eine Körperhaltung eines Fahrers (50) des Fahrrads (100) relativ zum Fahrrad (100) repräsentieren, Erkennen eines Übergangs des Fahrers (50) von einer Sitzposition (1) in eine Stehposition (2) basierend auf den erfassten Sensordaten, und gesteuertes Verringern eines Übersetzungsverhältnisses des Schaltsystems (10) im Ansprechen auf das Erkennen des Übergangs des Fahrers (50) von der Sitzposition (1) in die Stehposition (2).

## Beschreibung

### Stand der Technik

Die vorliegende Erfindung betrifft ein Verfahren zum Steuern eines Schaltsystems eines Fahrrads, ein Schaltsystem eines Fahrrads, und ein Fahrrad.

Bekannt sind Schaltsysteme für Fahrräder, welche elektronisch betätigbar ausgebildet sind. Dadurch ergibt sich die Möglichkeit, eine automatische Betätigung eines Gangwechsels bereitzustellen. Zum Auslösen eines derartigen automatisch betätigten Gangwechsels sind beispielsweise bestimmte Schaltschwellen vorgesehen. Häufig sind diese Schaltstellen derart ausgebildet, um eine gute Einregelung einer Ziel-Trittfrequenz zu bewirken. Dadurch kann jedoch nicht an allen Fahrsituation ein optimaler Fahrkomfort und ein effizienter Betrieb des Fahrrads bereitgestellt werden.

### Offenbarung der Erfindung

Das erfindungsgemäße Verfahren mit den Merkmalen des Anspruchs 1 bietet demgegenüber den Vorteil, dass auf einfache Weise eine automatische Betätigung von Gangwechseln einer Gangschaltung eines Fahrrads ermöglicht werden kann, wobei zuverlässig ein hoher Tretkomfort und eine hohe Effizienz für einen Fahrer des Fahrrads auch in stehenden Fahrpositionen bereitgestellt werden kann. Dies wird erfindungsgemäß erreicht durch ein Verfahren zum Steuern einer Gangschaltung eines Fahrrads, umfassend die Schritte:
- Erfassen von Sensordaten, welche eine Körperhaltung eines Fahrers des Fahrrads relativ zum Fahrrad repräsentieren,
- Erkennen eines Übergangs des Fahrers von einer Sitzposition in eine Stehposition oder von einer Stehposition in eine Sitzposition basierend auf den erfassten Sensordaten, und
- gesteuertes Verringern eines Übersetzungsverhältnisses des Schaltsystems im Ansprechen auf das Erkennen des Übergangs des Fahrers von der Sitzposition in die Stehposition oder gesteuertes Erhöhen des Übersetzungsverhältnisses des Schaltsystems im Ansprechen auf das Erkennen des Übergangs des Fahrers von der Stehposition in die Sitzposition.

Das heißt, bei dem Verfahren wird erkannt, dass der Fahrer eine stehende Fahrposition einnimmt oder einnehmen wird, wobei basierend auf dieser Erkennung ein Übersetzungsverhältnis im Schaltsystem des Fahrrads verkleinert wird. Insbesondere wird somit ein längerer Gang eingelegt, sodass sich beispielsweise bei im wesentlichen gleicher Geschwindigkeit die Trittfrequenz verringert. Bei dem Verfahren wird auch die umgekehrte Situation erkannt, dass der Fahrer eine sitzende Fahrposition einnimmt oder einnehmen wird, wobei basierend auf dieser Erkennung ein Übersetzungsverhältnis im Schaltsystem des Fahrrads erhöht wird.

Mit anderen Worten wird automatisch ein kürzerer Gang eingelegt, wenn sich der Fahrer von der stehenden Fahrposition wieder auf den Sattel des Fahrrads setzt und in der Sitzposition weiter pedaliert. Insbesondere kann somit die Trittfrequenz beispielsweise bei im wesentlichen gleichbleibender Geschwindigkeit durch das Schaltsystem automatisch erhöht werden, sodass der Fahrer mit hohem Fahrkomfort weiter pedalieren kann.

Als Sitzposition wird insbesondere eine Körperhaltung des Fahrers angesehen, in welcher der Fahrer auf einem Sattel des Fahrrads sitzt, insbesondere während der Fahrer pedaliert. Zudem wird insbesondere als Stehposition eine Körperhaltung des Fahrers angesehen, in der der Fahrer nicht auf dem Sattel des Fahrrads sitzt, insbesondere während des Pedalierens. Bevorzugt wird die Stehposition auch als Wiegetritt angesehen.

Vorzugsweise wird das gesteuerte Verringern des Übersetzungsverhältnisses dabei unmittelbar im Ansprechen auf das Erkennen des Übergangs des Fahrers von der Sitzposition in die Stehposition durchgeführt. Ebenso wird vorzugsweise das gesteuerte Erhöhen des Übersetzungsverhältnisses unmittelbar im Ansprechen auf das Erkennen des Übergangs des Fahrers von der Stehposition in die Sitzposition durchgeführt.

Besonders vorteilhaft ist es, wenn das Übersetzungsverhältnis bereits verringert wurde, bevor der Fahrer sich tatsächlich in der Stehposition befindet.

Besonders vorteilhaft ist es, wenn ein eine Erkennung eines bevorstehenden Übergangs des Fahrers von der Sitzposition in die Stehposition erfolgt, und wenn das gesteuerte Verringern des Übersetzungsverhältnisses im Ansprechen auf den erkannten bevorstehenden Übergang des Fahrers von der Sitzposition in die Stehposition durchgeführt wird.

Das Verfahren bietet somit den Vorteil, dass eine Schaltstrategie bereitgestellt werden kann, die einen optimalen Betrieb des Fahrrads beim Übergang des Fahrers von der Sitzposition in den Wiegetritt, oder umgekehrt, ermöglichen kann. Da der Fahrer in der stehenden Fahrposition im Vergleich zur sitzenden Fahrposition zusätzlich sein gesamtes Körpergewicht, beispielsweise unter anderem durch Hin- und Her-Verlagern des Fahrrads, einsetzen kann, kann in diesem Fahrzustand ein besonders hohes Drehmoment auf eine Kurbelwelle des Fahrrads aufgebracht werden. Durch Bereitstellen einer verringerten Übersetzung kann dabei ein höheres Lastmoment im Vergleich zum Pedalieren in der Sitzposition bereitgestellt und berücksichtigt werden. Damit kann eine kleinere Trittfrequenz für den Fahrer bereitgestellt werden, was sich im Betrieb besonders vorteilhaft auf einen hohen Fahrkomfort auswirkt. Zudem kann dadurch ein besonders effizienter Betrieb des Fahrrads ermöglicht werden.

Die Unteransprüche haben bevorzugte Weiterbildungen der Erfindung zum Inhalt.

Bevorzugt umfasst das Verfahren ferner den Schritt: Erkennen einer Körperhaltung eines Fahrers des Fahrrads relativ zum Fahrrad basierend auf den erfassten Sensordaten. Mit Hilfe des Verfahrens kann auch die Körperhaltung, also die Sitzposition oder die Stehposition, bestimmt werden, nicht nur der Wechsel zwischen den Körperhaltungen.

Besonders bevorzugt erfolgt das gesteuerte Verringern des Übersetzungsverhältnisses derart, um eine vorbestimmte Steh-Trittfrequenz einzustellen. Das heißt, von dem Schaltsystem wird, beispielsweise in Abhängigkeit der momentanen Geschwindigkeit des Fahrrads, das Übersetzungsverhältnis derart gesteuert eingestellt, dass die vorbestimmte Steh-Trittfrequenz eingeregelt wird. Beispielsweise kann die Steh-Trittfrequenz ein vordefinierter Wert sein, oder alternativ bevorzugt beispielsweise von dem Fahrer des Fahrrads vorgebbar sein. Alternativ oder zusätzlich bevorzugt kann, insbesondere im Ansprechen auf das Erkennen des Übergangs des Fahrers von der Stehposition in die Sitzposition, das gesteuerte Erhöhen des Übersetzungsverhältnisses derart erfolgen, um eine vorbestimmte Sitz-Trittfrequenz einzustellen. Vorzugsweise ist die Steh-Trittfrequenz kleiner als die Sitz-Trittfrequenz, bevorzugt um mindestens 5 %, vorzugsweise mindestens 10 %, bezogen auf die Sitz-Trittfrequenz.

Vorzugsweise erfolgt das gesteuerte Verringern des Übersetzungsverhältnisses durch eine Änderung des momentanen Übersetzungsverhältnisses um einen vordefinierten prozentualen oder absoluten Übersetzungsbetrag. Mit anderen Worten wird das Übersetzungsverhältnis in Abhängigkeit der momentanen Übersetzung um einen prozentualen Übersetzungsbetrag, insbesondere bezogen auf das momentane Übersetzungsverhältnis, oder alternativ um einen absoluten Übersetzungsbetrag geändert. Vorzugsweise sind der prozentuale Übersetzungsbetrag bzw. der absolute Übersetzungsbetrag in Abhängigkeit der verschiedenen Gangstufen des Schaltsystems definiert. Das heißt, beispielsweise kann das gesteuerte Verringern des Übersetzungsverhältnisses derart erfolgen, dass automatisch um eine bestimmte Anzahl an Gängen hoch geschalten wird. Alternativ oder zusätzlich bevorzugt kann, insbesondere im Ansprechen auf das Erkennen des Übergangs des Fahrers von der Stehposition in die Sitzposition, das gesteuerte Erhöhen des Übersetzungsverhältnisses durch eine Erhöhung des momentanen Übersetzungsverhältnisses um einen vordefinierten prozentualen oder absoluten Übersetzungsbetrag erfolgen. Dadurch kann eine besonders einfache und kostengünstige Durchführung des Verfahrens ermöglicht werden.

Weiter bevorzugt erfolgt das gesteuerte Verringern des Übersetzungsverhältnisses derart, um eine vordefinierte prozentuale oder absolute Verringerung einer momentanen Trittfrequenz zu bewirken. Das heißt, es erfolgt ein derartiges geregeltes Anpassen des Übersetzungsverhältnisses, um durch den Gangwechsel, insbesondere bei im wesentlichen gleichbleibender Geschwindigkeit, eine vordefinierte Änderung der Trittfrequenz zu bewirken. Beispielsweise kann automatisch eine Verringerung der Trittfrequenz um mindestens 5 %, bevorzugt um mindestens 10 %, eingestellt werden. Alternativ bevorzugt kann beispielsweise automatisch eine Verringerung der Trittfrequenz um einen Betrag von mindestens 5 Umdrehungen/min, bevorzugt um mindestens 10 Umdrehungen/min, bewirkt werden. Alternativ oder zusätzlich bevorzugt kann, insbesondere im Ansprechen auf das Erkennen des Übergangs des Fahrers von der Stehposition in die Sitzposition, das gesteuerte Erhöhen des Übersetzungsverhältnisses derart erfolgen, um eine vordefinierte prozentuale oder absolute Erhöhung der momentanen Trittfrequenz zu bewirken.

Vorzugsweise erfolgt eine automatische Ansteuerung des Schaltsystems, insbesondere mittels einer Steuereinheit, basierend auf einem vorbestimmten charakteristischen Schaltprofil. Als Schaltprofil kann beispielsweise eine nutzerindividuelle Schaltlogik angesehen werden, wobei beispielsweise Schaltschwellen, in Abhängigkeit von welchen Gangwechsel initiiert werden, in Abhängigkeit von vorbestimmten Parametern, wie beispielsweise Fahrbahnbeschaffenheit, Fahrbahnsteigung, Unterstützungsfaktor einer elektrischen Antriebseinheit, nutzerindividuellen Schaltcharakteristiken, oder dergleichen, angesehen werden. Dabei erfolgt das gesteuerte Verringern des Übersetzungsverhältnisses des Schaltsystems beim erkannten Übergang des Fahrers von der Sitzposition in die Stehposition durch eine Anpassung des charakteristischen Schaltprofils. Somit kann ein Betrieb des Fahrrads mit einem besonders hohen Fahrkomfort für den Fahrer ermöglicht werden. Alternativ oder zusätzlich bevorzugt kann, insbesondere im Ansprechen auf das Erkennen des Übergangs des Fahrers von der Stehposition in die Sitzposition, das gesteuerte Erhöhen des Übersetzungsverhältnisses ebenfalls durch eine entsprechende Anpassung des charakteristischen Schaltprofils erfolgen.

Weiter bevorzugt erfolgt das Erfassen der Körperhaltung des Fahrers basierend auf Sensordaten einer Sensorik des Fahrrads. Insbesondere umfasst die Sensorik eine Inertialmesseinheit und/oder einem Drehmomentsensor, vorzugsweise mittels welchem ein Tretmoment des Fahrers erfasst werden kann, und/oder einen Geschwindigkeitssensor und/oder einen Trittfrequenzsensor.

Damit kann auf einfache Weise beispielsweise basierend auf charakteristischen Änderungen von mittels der Sensorik erfassten Sensordaten die Änderung der Körperhaltung des Fahrers erkannt werden.

Bevorzugt erfolgt das Erkennen des Übergangs des Fahrers von der Sitzposition in die Stehposition im Ansprechen auf eine Erfassung einer kurzzeitigen Verzögerung des Fahrrads. Insbesondere wird als kurzzeitige Verzögerung eine vorübergehende Reduktion der Geschwindigkeit und/oder eine kurzzeitige signifikante Verringerung der Beschleunigung des Fahrrads angesehen. Beispielsweise kann als Zeitraum dabei maximal eine Sekunde, bevorzugt 0,5 Sekunden, angesehen werden. Eine derartige kurzzeitige Verzögerung kann beispielsweise durch den Übergang des Fahrers von der Position in den Wiegetritt dadurch auftreten, dass der Fahrer seinen Körperschwerpunkt beim Übergang in Fahrtrichtung nach vorne verlagert und das Fahrrad somit beispielsweise relativ zu seinem Körper nach hinten schiebt. Somit kann auf einfache Weise beispielsweise mittels eines Geschwindigkeitssensors und/oder einer Inertialmesseinheit der Übergang von der Sitzposition endlich die Position ermittelt werden.

Besonders bevorzugt erfolgt das Erkennen des Übergangs des Fahrers von der Sitzposition in die Stehposition, wenn gleichzeitig zur Erfassung der kurzzeitigen Verzögerung des Fahrrads eine Erkennung eines bremsbetätigungsfreien Betriebs des Fahrrads erfolgt, das heißt wenn keine Bremsbetätigung vorliegt. Beispielsweise kann der bremsbetätigungsfreie Betrieb mittels eines Bremsdrucksensors und/oder mittels eines Antiblockiersystems des Fahrrads erfasst werden. Damit kann eine besonders zuverlässige Erkennung der Wechsel der Körperhaltung des Fahrers bereitgestellt werden.

Vorzugsweise erfolgt das Erkennen des Übergangs des Fahrers von der Sitzposition in die Stehposition im Ansprechen auf eine Erfassung einer Pendelbewegung des Fahrrads um eine Fahrrad-Längsachse. Insbesondere wird als Pendelbewegung eine alternierende Rollbewegung des Fahrrads um die Längsachse angesehen. Vorteilhafterweise kann eine derartige Pendelbewegung mittels einer Inertialmesseinheit erfasst werden. Eine derartige Pendelbewegung tritt insbesondere im Wiegetritt auf. Somit kann eine weitere zuverlässige Möglichkeit zur Erkennung der Körperhaltung des Fahrers bereitgestellt werden.

Bevorzugt erfolgt das Erkennen des Übergangs des Fahrers von der Sitzposition in die Stehposition im Ansprechen auf eine Erfassung einer Verringerung einer momentanen Ist-Trittfrequenz und/oder basierend auf einer Erhöhung eines momentanen Ist-Tretmoments. Insbesondere wird dabei jeweils eine signifikante Verringerung bzw. Erhöhung betrachtet. Eine niedrigere Trittfrequenz und/oder ein höheres Tretmoment sind beispielsweise charakteristisch für einen Wiegetritt im Vergleich zu einem Pedalieren in der Sitzposition.

Weiter bevorzugt erfolgt das Erkennen des Übergangs des Fahrers von der Sitzposition in die Stehposition basierend auf Sensordaten eines Sitzbelegungssensors des Fahrrads. Beispielsweise kann ein derartiger Sitzbelegungssensor eingerichtet sein, um einen Druck auf einem Fahrradsattel des Fahrrads zu erfassen. Somit kann eine besonders einfache und eindeutige Erfassung von Stehposition und Sitzposition ermöglicht werden.

Weiterhin führt die Erfindung zu einem Schaltsystem eines Fahrrads, vorzugsweise eines Elektrofahrrads, umfassend eine Steuereinheit. Die Steuereinheit ist dabei eingerichtet, um eine Gangschaltung des Schaltsystems zu betätigen, insbesondere zum steuerbaren Verändern eines Übersetzungsverhältnisses des Schaltsystems. Ferner ist die Steuereinheit eingerichtet, das beschriebene Verfahren durchzuführen. Vorzugsweise umfasst die Gangschaltung eine Kettenschaltung, welche eingerichtet ist, eine Fahrradkette zwischen Ritzeln unterschiedlicher Größe zu bewegen, um dadurch ein Übersetzungsverhältnis zu verändern. Alternativ oder zusätzlich bevorzugt kann die Gangschaltung eine Getriebeschaltung umfassen. Besonders bevorzugt weist die Gangschaltung eine elektronische Betätigungsvorrichtung auf, wobei insbesondere die Steuereinheit eingerichtet ist, die elektronische Betätigungsvorrichtung der Gangschaltung zu betätigen.

Ferner betrifft die Erfindung ein Fahrrad, vorzugsweise ein Elektrofahrrad, welches das beschriebene Schaltsystem umfasst.

### Kurze Beschreibung der Zeichnungen

Im Folgenden wird die Erfindung anhand von Ausführungsbeispielen in Verbindung mit den Figuren beschrieben. In den Figuren sind funktional gleiche Bauteile jeweils mit gleichen Bezugszeichen gekennzeichnet. Dabei zeigt:
- Figur 1: eine vereinfachte schematische Ansicht eines Fahrrads, bei dem ein Verfahren zum Steuern eines Schaltsystems des Fahrrads gemäß einem Ausführungsbeispiel der Erfindung durchgeführt wird,
- Figur 2: eine stark vereinfachte schematische Ansicht von Schritten des Verfahrens des ersten Ausführungsbeispiels,
- Figur 3: eine vereinfachte schematische Ansicht einer Sitzposition bei der Durchführung des Verfahrens des Ausführungsbeispiels,
- Figur 4: eine vereinfachte schematische Ansicht einer Stehposition bei der Durchführung des Verfahrens des Ausführungsbeispiels, und
- Figur 5: alternative vereinfachte schematische Ansichten der Stehposition.

### Bevorzugte Ausführungsformen der Erfindung

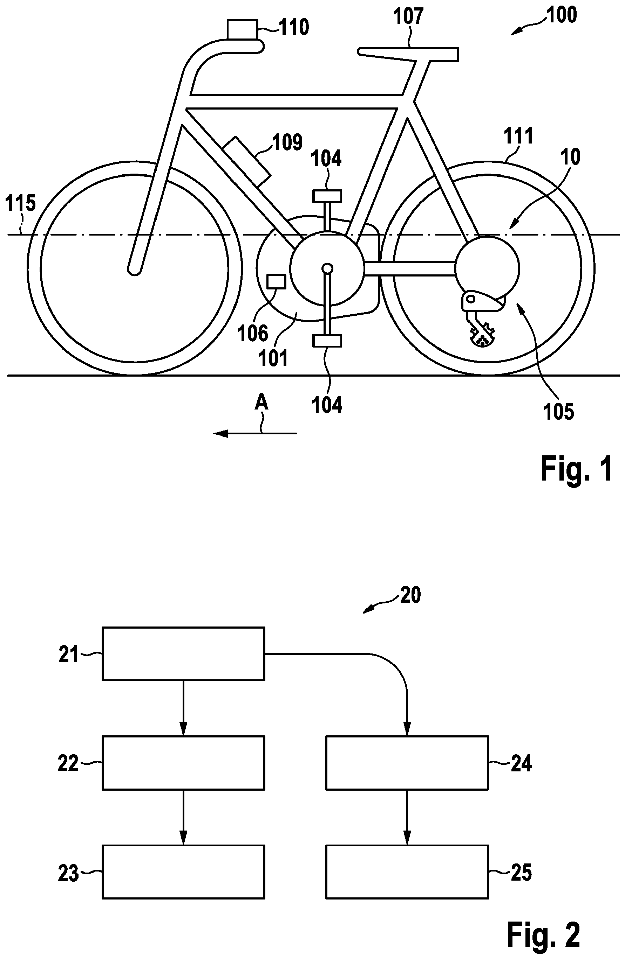

Figur 1 zeigt eine vereinfachte schematische Ansicht eines Fahrrads 100 mit einem Schaltsystem 10, welches eine Gangschaltung 105 und eine Steuereinheit 106 umfasst. Bei der Gangschaltung 105 handelt es sich um eine Kettenschaltung, welche einen Umwerfer und mehrere verschieden große Ritzel zumindest an einer Hinterradnabe des Fahrrads 100 umfasst.

Die Gangschaltung 105 weist eine elektronische Betätigungsvorrichtung auf, welche im Ansprechen auf einen Empfang elektronischer Betätigungssignale einen Gangwechsel, das heißt eine Änderung einer Übersetzung im Antriebsstrang des Fahrrads 100, bewirkt. Die elektronischen Betätigungssignale können von der Steuereinheit 106 erzeugt werden. Insbesondere kann dabei eine automatische Schaltung des Fahrrads 100 bereitgestellt werden.

Bei dem Fahrrad 100 handelt es sich um ein Elektrofahrrad, welches eine Antriebseinheit 101, insbesondere mit einem Elektromotor, umfasst. Vorzugsweise ist die Steuereinheit 106 in die Antriebseinheit 101 integriert. Die Antriebseinheit 101 kann mittels eines elektrischen Energiespeichers 109 des Fahrrads 100 mit elektrischer Energie versorgt werden. Die Antriebseinheit 101 kann dabei die mittels Muskelkraft eines Fahrers des Fahrrads 100 erzeugte Tretkraft durch ein elektromotorisch erzeugtes Motordrehmoment unterstützen.

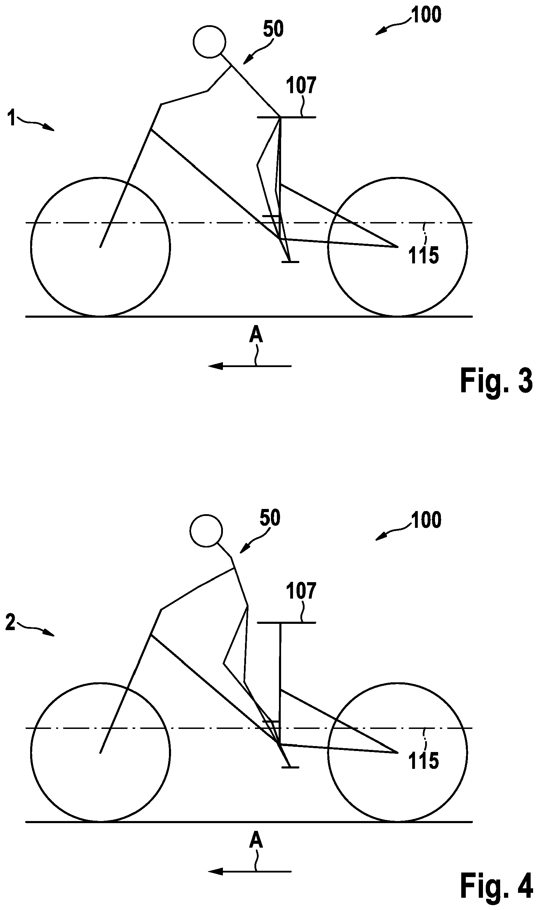

Die Steuereinheit 106 ist dabei eingerichtet, ein Verfahren 20 zum, insbesondere automatischen, Steuern der Gangschaltung 105 des Schaltsystems 10 des Fahrrads 100 durchzuführen. Die Verfahrensschritte des Verfahrens 20 sind stark vereinfacht schematisch in der Figur 2 dargestellt und werden nachfolgend beschrieben. Die Figuren 3 bis 5 dienen der weiteren Erläuterung von Details der Durchführung des Verfahrens.

In dem Ausführungsbeispiel des Verfahrens 20 gemäß Figur 2 erfolgt in einem ersten Schritt 21 eine Erfassung einer Körperhaltung eines Fahrers 50 des Fahrrads 100 relativ zum Fahrrad 100.

Insbesondere wird dabei zwischen, vorzugsweise genau, zwei verschiedenen Körperhaltungen des Fahrers 50 unterschieden, nämlich einer Sitzposition 1 und einer Stehposition 2 (vergleiche Figur 3 und 4).

In der Sitzposition 1 sitzt der Fahrer 50 auf einem Sattel 107 des Fahrrads 100 und pedaliert in dieser Körperhaltung, um mittels der Pedale 104 ein Tretmoment, das zumindest teilweise zum Vortrieb des Fahrrads 100 dient, zu erzeugen.

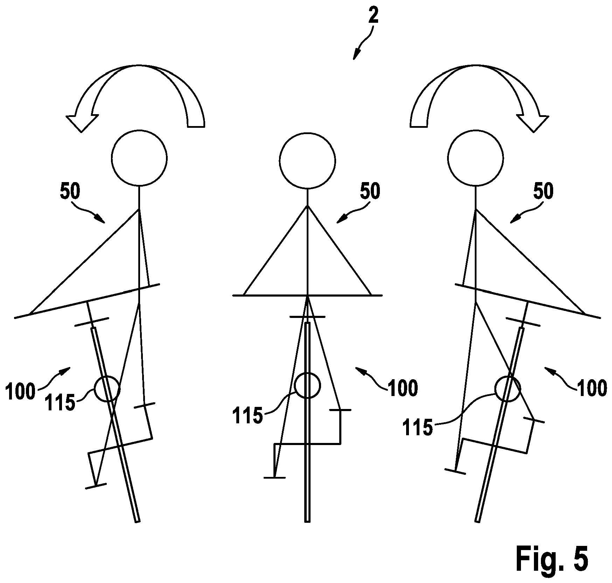

In der Stehposition 2 steht der Fahrer 50, beispielsweise ausschließlich, auf den Pedalen 104 während des Pedalierens ohne Kontakt zum Sattel 107. Die Stehposition 2 kann dabei auch als Wiegetritt bezeichnet werden. Hierbei erzeugt der Fahrer 50 unter anderem auch dadurch ein starkes Tretmoment, dass dieser sein Körpergewicht verlagert und nutzt, und das Fahrrad 100 um dessen Längsachse 115 schwenkt (vergleiche Figur 5), um stärker in die Pedale 104 zu treten.

Das Erfassen der Körperhaltung erfolgt dabei mittels einer Sensorik 110 des Fahrrads 100. Dabei können ein oder mehrere verschiedene der nachfolgend beschriebenen Prinzipien der Erfassung verwendet werden.

Beispielsweise kann mittels eines Drehmomentsensors und/oder eines Trittfrequenzsensors der Sensorik 110 eine momentane Pedalbetätigung überwacht werden und basierend darauf erkannt, ob der Fahrer die Pedale derzeit in der Sitzposition 1 oder in der Stegposition 2 betätigt. Alternativ oder zusätzlich bevorzugt kann mittels einer Inertialmesseinheit eine Bewegung des Fahrrads 100 überwacht und basierend darauf erkannt werden, in welcher Körperhaltung der Fahrer 50 sich gerade auf dem Fahrrad 100 befindet.

Basierend auf der erfassten Körperhaltung erfolgt bei dem Verfahren 20 im nächsten Schritt 22 ein Erkennen eines Übergangs des Fahrers 50 von der Sitzposition 1 in die Stehposition 2.

Dieser Übergang kann beispielsweise dadurch erkannt werden, dass insbesondere mittels eines Geschwindigkeitssensors und/oder mittels der Inertialmesseinheit eine kurzzeitige Verzögerung des Fahrrads 100, welche aus der Gewichtsverlagerung des Fahrers 50 relativ zum Fahrrad 100, wenn dieser in die Stehposition 2 aufsteht, auftritt, erfasst wird.

Bevorzugt erfolgt das Erkennen im Schritt 22 dabei entsprechend dem vorangehenden Absatz nur, wenn gleichzeitig ein bremsbetätigungsfreier Betrieb des Fahrrads 100 vorliegt. Der bremsbetätigungsfreie Betrieb kann beispielsweise mittels eines Bremsdrucksensors und/oder eines Antiblockiersystems ermittelt werden.

Alternativ oder zusätzlich kann der Übergang von der Sitzposition 1 in die Stehposition 2 basierend auf einer erfassten Pendelbewegung des Fahrrads 100 um eine Fahrrad-Längsachse 115 erkannt werden. Die Fahrrad-Längsachse 115 erstreckt sich dabei im Wesentlichen entlang einer Fahrtrichtung A des Fahrrads 100.

Eine derartige Pendelbewegung ist beispielhaft in der Figur 5 dargestellt, in der entsprechend drei Positionen während eines Wiegetritts, das heißt in der Stehposition 2 dargestellt sind. Hierbei bewegt der Fahrer 50 das Fahrrad 100 relativ zu dessen Körperschwerpunkt während des Pedalierens um eine mittlere Normallage (in der Figur 5 mittig dargestellt). Die in Figur 5 links und rechts dargestellten Positionen zeigen beispielhafte linksseitige und rechtsseitige Endpositionen dieser Pendelbewegung.

Diese Pendelbewegung kann dabei auf einfache Weise und zuverlässig mittels der Inertialsensorik des Fahrrads 100 erfasst werden.

Weiter alternativ oder zusätzlich bevorzugt kann der Übergang des Fahrers 50 von der Sitzposition 1 in die Stehposition basierend auf einer Erfassung einer Verringerung einer momentanen Ist-Trittfrequenz und/oder einer Erhöhung eines momentanen Ist-Tretmoments erfolgen. Eine Verringerung der Ist-Trittfrequenz und eine Erhöhung des Ist-Tretmoments sind beispielsweise charakteristische Änderungen in der Art und Weise der Betätigung der Pedale 104, welche beim Wechsel vom Pedalieren in der Sitzposition 1 in den Wiegetritt auftreten.

Eine weitere besonders einfache Möglichkeit zur Erkennung des Übergangs des Fahrers von der Sitzposition 1 in die Stehposition 2 kann alternativ oder zusätzlich mittels eines Sitzbelegungssensors des Fahrrads 100 erfolgen. Ein derartiger Sitzbelegungssensor kann beispielsweise im Sattel 107 des Fahrrads 100 angeordnet sein und unmittelbar, beispielsweise basierend auf einer Druckerkennung, Erfassen, ob der Fahrer 50 auf dem Sattel 107 sitzt oder nicht.

Wenn ein Übergang des Fahrers von der Sitzposition 1 in die Stehposition 2 erkannt wurde, erfolgt, besonders bevorzugt noch bevor der Fahrer 50 sich tatsächlich in der Stehposition 2 befindet, im Schritt 23 des Verfahrens 20 eine gesteuerte Betätigung des Schaltsystems 10 des Fahrrads 100 durch die Steuereinheit 106 derart, um ein Übersetzungsverhältnisses des Schaltsystems 10 zu verringern. Das heißt, es wird ein längerer Gang eingelegt, mit dem, beispielsweise unter Annahme gleichbleibender Geschwindigkeit, durch den mechanischen Zusammenhang des Antriebsstrangs des Fahrrads 100, die Trittfrequenz reduziert wird. Dadurch kann im Wiegetritt eine vorteilhafte Betätigung des Antriebs des Fahrrads 100 erfolgen, da durch die angepasste längere Übersetzung ein komfortableres Pedalieren und zudem eine gesteigerte Effizienz in der Stehposition 2 bereitgestellt werden kann. Dadurch, dass das Übersetzungsverhältnisses automatisch durch die Steuereinheit 106 angepasst wird, kann zudem ein besonders hoher Fahrkomfort für den Fahrer 50 des Fahrrads 100 bereitgestellt werden, da hierdurch jederzeit und besonders zeitig eine optimierte Anpassung der Übersetzung an die Körperhaltung des Fahrers 50 bereitgestellt werden kann.

Bevorzugt wird das Übersetzungsverhältnis dabei derart verringert, dass die momentane Trittfrequenz um eine vordefinierte prozentuale Verringerung reduziert wird. Beispielsweise kann unter der Annahme gleichbleibender Geschwindigkeit des Fahrrads 100 eine Reduzierung der Trittfrequenz um 10 % initiiert werden, indem das Schaltsystem 10 vorzugsweise auf eine entsprechend niedrigere Soll-Steh-Trittfrequenz eingeregelt wird.

Alternativ bevorzugt kann direkt eine vorbestimmte Steh-Trittfrequenz eingestellt werden, welche beispielsweise als vordefinierte Wert gespeichert ist, oder alternativ bevorzugt durch den Fahrer 50 definierbar ist.

Eine weitere vorteilhafte Variante kann dadurch erzielt werden, dass das gesteuerte Verringern des Übersetzungsverhältnisses dadurch erfolgt, dass mittels der Steuereinheit 106 eine Anpassung eines charakteristischen Schaltprofils der automatischen Schaltung des Fahrrads 100 vorgenommen wird. Beispielsweise können anhand des Schaltprofils errechnete Schaltschwellen durch die Steuereinheit 106 angepasst werden.

Zusätzlich erfolgt bei dem Verfahren 20 eine gesteuerte Anpassung des Übersetzungsverhältnisses des Schaltsystems 10 auch bei umgekehrter Änderung der Körperhaltung, das heißt wenn ein Übergang des Fahrers 50 von der Stehposition 2 in die Sitzposition 1 erkannt wird. Diese Erkennung erfolgt im Schritt 24 (vergleiche Figur 2).

Wenn ein derartiger Übergang zurück in die Sitzposition 1 erkannt wird, erfolgt im Schritt 25 ein gesteuertes Erhöhen des Übersetzungsverhältnisses des Schaltsystems 10, vorzugsweise umgekehrt in analoger Weise zum oben beschriebenen gesteuerten Verringern beim Übergang von der Sitzposition 1 in die Stehposition 2.

## Patentansprüche

1. Verfahren zum Steuern eines Schaltsystems (10) eines Fahrrads (100), umfassend die Schritte, insbesondere während eines Pedalierens:
- Erfassen von Sensordaten, welche eine Körperhaltung eines Fahrers (50) des Fahrrads (100) relativ zum Fahrrad (100) repräsentieren,
- Erkennen eines Übergangs des Fahrers (50) von einer Sitzposition (1) in eine Stehposition (2) oder von der Stehposition (2) in die Sitzposition (1) basierend auf den erfassten Sensordaten, und
- gesteuertes Verringern eines Übersetzungsverhältnisses des Schaltsystems (10) im Ansprechen auf das Erkennen des Übergangs des Fahrers (50) von der Sitzposition (1) in die Stehposition (2) oder gesteuertes Erhöhen des Übersetzungsverhältnisses des Schaltsystems (10) im Ansprechen auf das Erkennen des Übergangs des Fahrers (50) von der Stehposition (2) in die Sitzposition (1).

2. Verfahren nach Anspruch 1, ferner umfassend den Schritt:
- Erkennen einer Körperhaltung eines Fahrers (50) des Fahrrads (100) relativ zum Fahrrad (100) basierend auf den erfassten Sensordaten.

3. Verfahren nach einem der vorhergehenden Ansprüche, wobei das gesteuerte Verringern und/oder Erhöhen des Übersetzungsverhältnisses derart erfolgt, um eine Steh-Trittfrequenz und/oder eine Sitz-Trittfrequenz einzustellen.

4. Verfahren nach einem der vorhergehenden Ansprüche, wobei das gesteuerte Verringern und/oder Erhöhen des Übersetzungsverhältnisses durch eine Änderung des momentanen Übersetzungsverhältnisses um einen vordefinierten prozentualen oder absoluten Übersetzungsbetrag erfolgt.

5. Verfahren nach einem der vorhergehenden Ansprüche, wobei das gesteuerte Verringern und/oder Erhöhen des Übersetzungsverhältnisses derart erfolgt, um eine vordefinierte prozentuale oder absolute Verringerung und/oder Erhöhung einer momentanen Trittfrequenz zu bewirken.

6. Verfahren nach einem der vorhergehenden Ansprüche,
- wobei eine automatische Ansteuerung des Schaltsystems (10) basierend auf einem vorbestimmten charakteristischen Schaltprofil erfolgt, und
- wobei das gesteuerte Verringern des Übersetzungsverhältnisses des Schaltsystems (10) im Ansprechen auf das Erkennen des Übergangs des Fahrrads (50) durch eine Anpassung des charakteristischen Schaltprofils erfolgt.

7. Verfahren nach einem der vorhergehenden Ansprüche, wobei das Erfassen der Körperhaltung des Fahrers (50) basierend auf Sensordaten einer Sensorik (110), insbesondere einer Inertialmesseinheit und/oder eines Drehmomentsensors und/oder eines Geschwindigkeitssensors und/oder eines Trittfrequenzsensors, erfolgt.

8. Verfahren nach Anspruch 7, wobei das Erkennen des Übergangs des Fahrers (50) von der Sitzposition (1) in die Stehposition (2) im Ansprechen auf eine Erfassung einer kurzzeitigen Verzögerung des Fahrrads (100) erfolgt.

9. Verfahren nach Anspruch 8, wobei das Erkennen des Übergangs des Fahrers (50) von der Sitzposition (1) in die Stehposition (2) im Ansprechen auf eine gleichzeitige Erkennung eines bremsbetätigungsfreien Betriebs des Fahrrads (100) erfolgt.

10. Verfahren nach einem der Ansprüche 7 bis 9, wobei das Erkennen des Übergangs des Fahrers (50) von der Sitzposition (1) in die Stehposition (2) im Ansprechen auf eine Erfassung einer Pendelbewegung des Fahrrads (100) um eine Fahrrad-Längsachse (115) erfolgt.

11. Verfahren nach einem der Ansprüche 7 bis 10, wobei das Erkennen des Übergangs des Fahrers (50) von der Sitzposition (1) in die Stehposition (2) im Ansprechen auf eine Erfassung einer Verringerung einer momentanen Ist-Trittfrequenz und/oder einer Erhöhung eines momentanen Ist-Tretmoments erfolgt.

12. Verfahren nach einem der vorhergehenden Ansprüche, wobei das das Erkennen des Übergangs des Fahrers (50) von der Sitzposition (1) in die Stehposition (2) basierend auf Sensordaten eines Sitzbelegungssensors des Fahrrads (100) erfolgt.

13. Schaltsystem eines Fahrrads (100), umfassend eine Steuereinheit (106), welche eingerichtet ist, zur Betätigung einer Gangschaltung des Schaltsystems (10), wobei die Steuereinheit (106) eingerichtet ist, das Verfahren (50) nach einem der vorhergehenden Ansprüche durchzuführen.

14. Fahrrad, insbesondere Elektrofahrrad, umfassend ein Schaltsystem (10) nach Anspruch 13.
